# EUROPÄISCHE PATENTSCHRIFT

(11) **EP 1 453 705 B1**
(45) Veröffentlichungstag und Bekanntmachung des Hinweises auf die Patenterteilung: **26.04.2006**
(21) Anmeldenummer: 02794977.5
(22) Anmeldetag: 02.12.2002
(51) Int. Cl.: B60R 21/20, B60R 22/46, B60R 21/26, B60R 21/01

(54) **MODUL FÜR EINE INSASSENSCHUTZVORRICHTUNG EINES KRAFTFAHRZEUGS**
MODULE FOR AN OCCUPANT-PROTECTION DEVICE OF A MOTOR VEHICLE
MODULE POUR DISPOSITIF DE PROTECTION DES OCCUPANTS D'UNE AUTOMOBILE

(30) Priorität: 12.12.2001 DE 10162119; 23.07.2002 DE 10234502
(43) Veröffentlichungstag der Anmeldung: 08.09.2004
(73) Patentinhaber: TAKATA-PETRI (Ulm) GmbH, 89081 Ulm (DE)
(72) Erfinder: SCHAUPP, Jochen, 73431 Aalen (DE); AULBACH, Alexander, 89703 Ulm (DE)
(74) Vertreter: Fischer, Uwe
(86) Internationale Anmeldenummer: PCT/DE2002/004489
(87) Internationale Veröffentlichungsnummer: WO 2003/049978

(56) Entgegenhaltungen:
- EP-A- 0 904 995
- DE-A- 19 731 219
- US-A- 4 020 453
- US-A- 5 662 353

## Beschreibung

Die Erfindung betrifft ein Modul für eine Insassenschutzvorrichtung eines Kraftfahrzeugs gemäß dem Oberbegriff des Anspruchs 1.

Ein derartiges Modul umfasst ein in einem Crash-Fall des Kraftfahrzeugs aktivierbares Funktionselement, das ein elektrisch leitfähiges Material aufweist, und eine Fixiervorrichtung zum mechanischen Festlegen des Funktionselementes an der Karosserie des Kraftfahrzeugs.

Die Insassenschutzvorrichtung kann dabei in Form einer Airbag-Einrichtung ausgebildet sein. Bei dem Funktionselement handelt es sich dann um den dem Airbag zugeordneten Gasgenerator.

Ebenso ist denkbar, dass die Insassenschutzvorrichtung als Gurtstraffeinrichtung zur Straffung eines Sicherheitsgurtes in einem Crash-Fall des Kraftfahrzeugs ausgebildet ist. Dabei ist das Funktionselement insbesondere als pyrotechnische Einrichtung zum Bereitstellen der für die Funktion des Gurtstraffens benötigte Bewegung ausgebildet.

Die aus dem Stand der Technik bekannten gattungsgemäßen Module weisen den Nachteil auf, dass in einem elektrischen Fehlerfall ein Potential und/oder ein Spannungsstoß ausgehend von der Kraftfahrzeugkarosserie über die Fixiervorrichtung mit dem Funktionselement in Wechselwirkung treten. Dies kann dazu führen, dass sich ein nicht gewollter bzw. undefinierbarer Zustand des aktivierbaren Funktionselementes einstellt. Dies hat zur Folge, dass im elektronischen Überwachungssystem der Insassenschutzvorrichtung eine Fehlfunktion der Insassenschutzvorrichtung detektiert wird.

Im Extremfall ist ebenso denkbar, dass das Funktionselement unbeabsichtigt ausgelöst wird.

Aus der EP 0 904 995 A2 (oberbegriff Anspruch 1) ist ein Gasgenerator bekannt, dessen Gehäuse aus Kunststoff ausgebildet ist. Um elektrostatische Aufladungen zu verhindern, ist das Gehäuse mit einer Stahlummantelung versehen oder galvanisch metallisiert. Über eine Stahlwanne ist das Gehäuse mit der Karosserie des Fahrzeugs verbunden.

Der vorliegenden Erfindung liegt daher die Aufgabe zugrunde, ein Modul für eine Insassenschutzvorrichtung eines Kraftfahrzeugs bereitzustellen, das auf einfache und kostengünstige Weise gegen eine Fehlfunktion geschützt ist.

Diese Aufgabe wird durch ein Modul mit den Merkmalen des Anspruchs 1 gelöst.

Erfindungsgemäß ist vorgesehen, dass das Funktionselement gegenüber der Karosserie des Kraftfahrzeuges elektrisch isoliert ist. Das Funktionselement weist eine elektrische Auslöseeinrichtung zur Aktivierung des Funktionselementes in einem Crash-Fall auf. Dadurch ist die elektrische Auslöseeinrichtung von einer elektrischen Wechselwirkung mit der Kraftfahrzeugkarosserie entkoppelt. Bei dem zylindrischen Funktionselement handelt es sich um einen Gasgenerator.

Auf diese Weise wird gewährleistet, dass das aktivierbare Funktionselement von einer elektrischen Wechselwirkung mit der Karosserie des Kraftfahrzeugs insbesondere in Form eines Spannungsstoßes entkoppelt ist. Dadurch lässt sich auf einfache Weise die Zuverlässigkeit eines Moduls für eine Insassenschutzvorrichtung eines Kraftfahrzeugs erhöhen und mögliche Fehlfunktionen vermeiden.

In einer bevorzugten Ausführungsform des Moduls ist das Funktionselement durch eine elektrisch nicht leitende Fixiervorrichtung gegenüber der Karosserie des Kraftfahrzeugs elektrisch isoliert. Dazu ist die Fixiervorrichtung zumindest abschnittsweise aus einem elektrisch nicht leitenden Material gefertigt.

Das Modul weist mit Vorteil separate Isoliermittel auf, die das Funktionselement gegenüber der Karosserie des Kraftfahrzeuges elektrisch isolieren. Zum Einsatz als separates Isoliermittel eignen sich sämtliche elektrisch nicht leitende Werkstoffe wie z.B. Papier, Pappe, Textilien, nicht leitende Kunststoffe und Lacke und nicht leitendes Kunststofffolienmaterial.

Die separaten Isoliermittel sind dabei bevorzugt derart angeordnet, dass das Funktionselement gegenüber der Fixiervorrichtung und/oder die Fixiervorrichtung gegenüber der Fahrzeugkarosserie elektrisch isoliert ist.

Eine bevorzugte Ausführungsform ist dadurch gekennzeichnet, dass die Isoliermittel zumindest in den Bereichen des Funktionselementes, die in mechanischem Kontakt mit der Fixiervorrichtung stehen, als elektrisch isolierende Materialien am Funktionselement vorgesehen sind. Dazu ließen sich die Isoliermittel beispielsweise in Form nicht lösbar auf der Oberfläche des Funktionselementes aufgebrachten Kunststoff- oder Lackschichten ausstellen.

Die Fixiervorrichtung des Moduls ist bevorzugt mehrteilig ausgebildet. Insbesondere weist sie eine Halteeinrichtung zur Aufnahme des Funktionselementes und eine an der Halteeinrichtung mechanisch festlegbare Montagevorrichtung zum mechanischen Festlegen der Montagevorrichtung an der Kraftfahrzeugkarosserie auf.

Dabei sind die Isoliermittel bevorzugt derart ausgebildet, dass sie das Funktionselement gegenüber der Halteeinrichtung und/oder die Halteeinrichtung gegenüber der Montagevorrichtung und/oder die Montagevorrichtung gegenüber der Karosserie des Kraftfahrzeuges elektrisch isolieren.

In einer bevorzugten Ausführungsform ist die Halteeinrichtung zur Aufnahme eines im Wesentlichen zylindrischen Funktionselementes ausgebildet. Dabei weisen die Isoliermittel bevorzugt ein hohlzylindrisches Isolierelement auf, das sich zwischen dem im Wesentlichen zylindrischen Funktionselement und der Halteeinrichtung anordnen lässt. Dadurch ist die elektrische Entkopplung zwischen dem Funktionselement und der Halteinrichtung gewährleistet.

Die Halteeinrichtung des Funktionselementes weist in einer bevorzugten Ausführungsform einen vom Funktionselement weggerichteten Flansch auf, der zur Befestigung der Halteeinrichtung an der Montagevorrichtung dient.

Zum mechanischen Festlegen der Halteeinrichtung an der Montagevorrichtung kann der Flansch der Halteeinrichtung Befestigungsmittel aufweisen.

Es ist ebenso denkbar, dass der Flansch der Halteeinrichtung mittels separater Befestigungsmittel an der Montagevorrichtung mechanisch festlegbar ist. Dabei weist der Flansch bevorzugt eine Mehrzahl von Löchern zum Durchführen der Befestigungsmittel auf, wobei die Montagevorrichtung korrespondierend angeordnete Löcher umfasst.

Bevorzugt dient weiterhin eine auf dem Flansch auflegbare Schiene mit im Abstand der Löcher des Flansches angeordneten nicht lösbaren oder lösbaren Befestigungselementen als Befestigungsmittel zum Fixieren der Halteeinrichtung an der Montagevorrichtung. Die Befestigungselemente können dabei beispielsweise als Schrauben, Nieten oder Rastelementen ausgeführt sein.

Bevorzugt weist ein derartiges Modul als Isoliermittel eine Isolierschiene zur elektrischen Isolierung zwischen den Befestigungsmitteln und der Halteeinrichtung auf. Dazu ist die Isolierschiene beispielsweise als ein sich zwischen der auflegbaren Schiene und dem Flansch der Halteeinrichtung erstreckendes Element ausgebildet, wobei die Isolierschiene im Bereich der Löcher für die Befestigungselemente derart in die Löcher der Halteeinrichtung und/oder in die Löcher der Montagevorrichtung eingreift, dass die Befestigungselemente gegenüber der Halteeinrichtung und/oder gegenüber der Montagevorrichtung elektrisch isoliert sind.

Alternativ lässt sich die Isolierschiene als ein sich zwischen der Montagevorrichtung und dem Flansch der Halteeinrichtung erstreckendes Element ausbilden, wobei die Isolierschiene wiederum im Bereich der Löcher für die Befestigungselemente derart in die Löcher der Montagevorrichtung und/oder in die Löcher der Halteeinrichtung eingreift, dass die Befestigungselemente gegenüber der Halteeinrichtung elektrisch isoliert sind.

Bei einer bevorzugten Verwendung des Moduls für eine Airbageinrichtung ist ein Abschnitt des Gassackes zwischen dem Flansch der Halteeinrichtung und der auflegbaren Schiene und/oder zwischen dem Flansch der Halteeinrichtung und der Montagevorrichtung angeordnet. Dabei sind in den Abschnitten des Gassackes Löcher zum Durchführen der Befestigungselemente vorgesehen. Auf diese Weise dienen die am Flansch der Halteeinrichtung angeordneten Abschnitte des Gassackes gleichzeitig als zusätzliche Isoliermittel, die das Halteelement von der Montagevorrichtung elektrisch entkoppelt.

Das erfindungsgemäße Modul dient bevorzugt zum Einsatz in einer Airbageinheit einer Insassenschutzvorrichtung, wobei das Funktionselement als Gasgenerator ausgebildet ist.

Das erfindungsgemäße Modul kann ebenso zum Einsatz in einer elektrisch auslösbaren Gurtstraffeinrichtung eines Sicherheitsgurtes vorgesehen sein. Dabei ist das Funktionselement insbesondere als pyrotechnische Einrichtung vorgesehen, die die zur Gurtstraffung benötige Bewegung des Sicherheitsgurtes gewährleistet.

Weitere Merkmale und Vorteile der Erfindung werden anhand der in den Figuren ausgeführten Ausführungsbeispielen des erfindungsgemäßen Moduls erläutert.

Es zeigen:
- Figur 1a: Perspektivdarstellung der einzelnen Bauelemente einer ersten Ausführungsform eines Moduls mit einem als Gasgenerator ausgebildeten Funktionselement;
- Figur 1b: Modul in der Ansicht der Figur 1a mit in montiertem Gasgenerator und zusätzlichem Isoliermittel;
- Figur 2: Querschnitt durch eine Halteeinrichtung mit Isoliermitteln;
- Figur 3: Perspektivdarstellung einer zweiten Ausführungsform eines Moduls mit einem als Gasgenerator ausgebildeten Funktionselement;
- Figur 4: Perspektivdarstellung einer dritten Ausführungsform eines Moduls mit einem als Gasgenerator ausgebildeten Funktionselement;
- Figur 5a: Perspektivdarstellung einer vierten Ausführungsform eines Moduls mit einem als Gasgenerator ausgebildeten Funktionselement und Isoliermitteln für die Befestigungsschiene und
- Figur 5b: Modul in der Ansicht der Figur 5a mit an der Befestigungsschiene angeordnetem Isoliermittel.

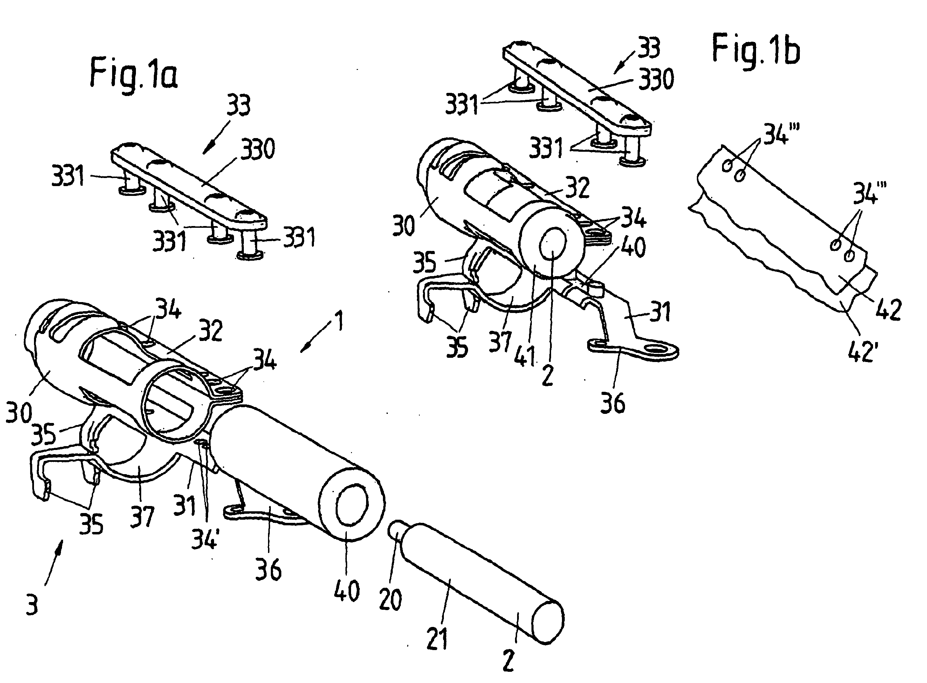

Figur 1a zeigt eine erste Ausführungsform eines Moduls 1 mit einem als Gasgenerator 2 ausgebildeten Funktionselement in einer Perspektivdarstellung und der Übersichtlichkeit halber perspektivisch vereinzelten Bauelemente.

Der im wesentlichen zylindrisch ausgebildete Gasgenerator 2 weist an seinem einen Ende eine elektrisch gesteuerte Auslöseeinrichtung 20 auf und lässt sich in einem hohlzylindrisch ausgebildetes Isolierelement 40 anordnen. Dieses Isolierelement 40 umschließt als ein separates Isoliermittel vollständig die Mantelfläche 21 des zylindrischen Gasgenerators. Das Isolierelement 40 ist in einer Halteeinrichtung 30 positionierbar, wobei die Mantelfläche des Isolierelementes 40 zumindest abschnittsweise in mechanischem Kontakt zur Halteeinrichtung 30 steht. Dabei ist die zumindest abschnittsweise elektrisch leitend ausgebildete Mantelfläche 21 durch das Isolierelement 40 von der Halteeinrichtung 30 elektrisch isoliert.

Das hohlzylindrische Isolierelement ist dabei aus elektrisch isolierendem Material, beispielsweise Kunststoff, Gummi, Papier, Pappe, Textilien oder Leder gefertigt.

Die Halteeinrichtung 30 bildet bei der in der Figur 1 dargestellten Ausführungsform zusammen mit einer Montagevorrichtung 31 die Fixiervorrichtung 3, die zum mechanischen Festlegen des Gasgenerators 2 an die Karosserie eines Kraftfahrzeuges dient. Dazu weist die Halteeinrichtung 30 einen vom Isolierelement 40 weg gerichteten Flansch 32 mit Löchern 34 auf. Am Flansch 32 lassen sich separate Befestigungsmittel 33 anordnen, um die Halteeinrichtung 30 an der Montagevorrichtung 31 zu fixieren.

Dazu weisen die separaten Befestigungsmittel 33 eine sich in der Länge des Flansches 32 erstreckende auf den Flansch auflegbare Schiene 330 mit an der Schiene angeordneten Befestigungselementen 331 auf. Durch die Löcher 34 des Flansches 32 und durch dazu korrespondierende Löcher 34' der Montagevorrichtung hindurch lassen sich die im Lochabstand an der Schiene 330 angeordneten Befestigungselemente 331 führen, um die Halteeinrichtung 30 mechanisch an der Montagevorrichtung 31 festzulegen.

Die Befestigungselemente 331 können dabei sowohl als lösbare, als auch als unlösbare Verbindungsmittel in Form von Schrauben, Nieten oder Rastelementen ausgebildet sein.

Die Montagevorrichtung 31 kann entsprechend den vorliegenden geometrischen Randbedingungen im Kraftfahrzeug eine Vielzahl von Formen aufweisen.

Bei dem in den Figuren 1a bis 5a dargestellten Ausführungsformen weist die Montagevorrichtung 31 jeweils die gleiche Form auf. Dabei ist ein halbschalenförmiger Aufnahmeabschnitt 37 zur Aufnahme der im wesentlichen zylindrischen Halteeinrichtung 30 vorgesehen, wobei der Flansch 32 bündig auf einem entsprechenden Befestigungsabschnitt mit den Löchern 34' der Montagevorrichtung 31 zu liegen kommt.

Weiterhin weist die Montagevorrichtung eine Mehrzahl von Befestigungsabschnitten auf, die beispielsweise in Form von Befestigungshaken 35 oder Befestigungsfüßen 36 ausgebildet sind. Zum mechanischen Festlegen der Montagevorrichtung 31 an der Karosserie eines Kraftfahrzeuges werden die Befestigungshaken 35 in zugeordneten Aufnahmen in der Karosserie verhakt. Die Befestigungsfüße 36 weisen Löcher zum Durchführen weiterer separater Befestigungsmittel beispielsweise in Form von Schrauben oder Nieten zum lösbaren oder unlösbaren Fixieren des Befestigungsfußes 36 an der Fahrzeugkarosserie auf.

Figur 1b zeigt das Modul aus Figur 1a, wobei das hohlzylindrische Isolierelement 40 zusammen mit dem Gasgenerator 2 im Innern der Halteeinrichtung 30 angeordnet ist. Gleiche Bauelemente sind dabei mit gleichen Bezugszeichen versehen.

Neben dem hohlzylindrischen Isolierelement 40 sind in der Figur 1 b weitere Isoliermittel zum elektrischen Isolieren zwischen dem Gasgenerator 2 und der Karosserie eines Kraftfahrzeuges dargestellt.

Auf der Montagevorrichtung 31 kann im Bereich der Löcher 34' eine Isolierschiene 41 vorgesehen sein. Diese Isolierschiene 41 erstreckt sich im wesentlichen entlang des Montagebereiches des Flansches 32 der Halteeinrichtung 30. Dabei weist sie in den Abschnitten der Löcher 34' im wesentlichen hohlzylindrische Elemente auf, die durch die Löcher 34' der Montagevorrichtung 31 und die Löcher 34 einer montierten Halteeinrichtung 30 hindurchgreifen. Diese hohlzylindrischen Elemente der Isolierschiene 41 sind, wie die Isolierschiene selbst aus elektrisch isolierendem Material, beispielsweise Kunststoff, Gummi, Papier, Pappe, Textilien oder Leder gefertigt. Die isolierschiene 41 verhindert somit den direkten mechanischen und somit elektrischen Kontakt zwischen den Befestigungselementen 331 der separaten Befestigungsmittel 33 und der Montagevorrichtung 31.

Weiterhin ist es vorteilhaft, den üblicherweise aus einem elektrisch nicht leitfähigem textilen Material hergestellten Gassack einer Airbageinrichtung als Isoliermittel zum elektrischen Isolieren zwischen dem Gasgenerator 2 und der Karosserie eines Kraftfahrzeuges zu nutzen.

Dazu können sowohl zwischen der auflegbaren Schiene 330 der separaten Befestigungsmittel 33 und dem Flansch 32 der Halteeinrichtung 30 als auch zwischen dem Flansch 32 der Halteeinrichtung 30 und der Montagevorrichtung 31 jeweils ein Gassackabschnitt 42, 42' mit entsprechend angeordneten Löchern 34"' zum Durchführen der Befestigungselemente 331 vorgesehen sein.

Diese Gassackabschnitte 42, 42' sind üblicherweise im Randbereich eines Gassackes derart angeordnet, dass sich der Gasgenerator 2 im Innern des Gassackes befindet.

In Figur 1b sind der Übersichtlichkeit halber lediglich die Abschnitte 42, 42' des Gassackes dargestellt. Auf diese Weise lässt sich der in einem Airbagmodul ohnehin vorhandene Gassack als ein Isoliermittel im Sinne der Erfindung einsetzen.

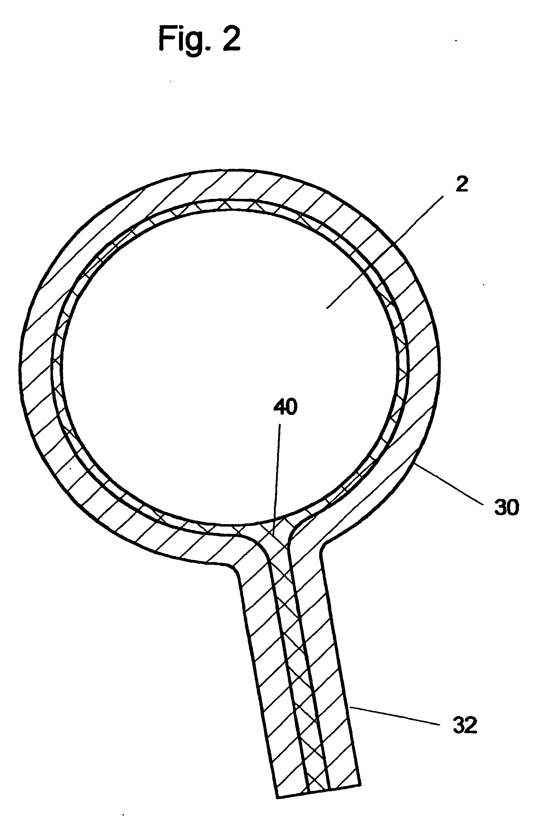

In Figur 2 ist ein Querschnitt durch eine Halteeinrichtung 30 eines im wesentlichen zylindrischen Funktionselementes 2 beispielsweise in Form eines Gasgenerators abgebildet. Ähnlich wie die in den Figuren 1a und 1b gezeigten Halteeinrichtungen 30 weist die Halteeinrichtung 30 einen vom Funktionselement 2 weg gerichteten Flansch 32 auf. Zwischen dem Funktionselement 2 und der Halteeinrichtung 30 ist ein im wesentlichen hohlzylindrisches Isolierelement 40 angeordnet. Dieses Isolierelement 40 kann zum einen als separates Bauelement aus einem der vorangehend genannten elektrische isolierenden Materialien hergestellt sein. Zum anderen ist ebenso denkbar, die mit dem Funktionselement 2 in mechanischem Kontakt stehenden Abschnitten der Halteeinrichtung 30 mit einer elektrisch isolierenden Schicht in Form von Lack oder Gummi zu versehen. Entsprechend können auch die mit der Halteeinrichtung 30 in mechanischem Kontakt stehenden Abschnitte des Funktionselementes mit einer solchen Schicht versehen sein.

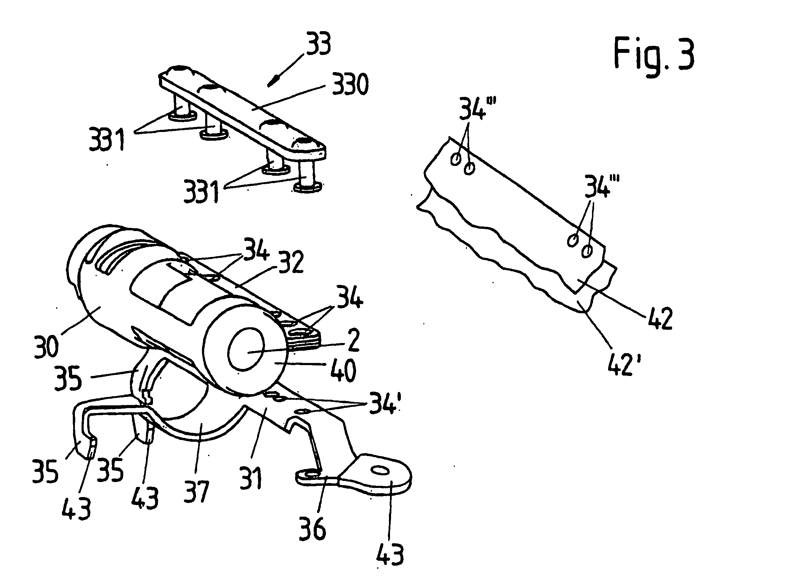

Figur 3 zeigt eine weitere Ausführungsform des Moduls aus Figur 1b. Im Unterschied zum Modul aus Figur 1b ist keine an der Montagevorrichtung 31 angeordnete Isolierschiene 41 als Isoliermittel vorgesehen. In der gezeigten Variante ist die Montagevorrichtung 31 an den mit der Karosserie eines Kraftfahrzeuges in mechanischer Verbindung stehenden Befestigungshaken 35 und Montagefüßen 36 derart mit Isolierschuhen 43 versehen, dass die Montagevorrichtung 31 und somit auch der daran über die Halteeinrichtung 30 festgelegte Gasgenerator gegenüber der Fahrzeugkarosserie elektrisch isoliert ist. Dazu umschließen die Isolierschuhe 43 die Befestigungshaken 35 und die Montagefüße 36 zumindest in den Bereichen, die bei der befestigten Montagevorrichtung 31 mit der Fahrzeugkarosserie in Kontakt stehen.

Die Isolierschuhe 43 lassen sich wiederum aus jedem der vorangehend genannten elektrisch isolierenden Materialen herstellen. Eine besonders vorteilhafte Variante sieht das Anspritzen der Isolierschuhe 43 aus einem elektrisch isolierenden Kunststoff vor. Außerdem können die Isolierschuhe 43 bei geeigneter Elastizität zur der Schwingungsdämpfung der Fixiervorrichtung 3 dienen.

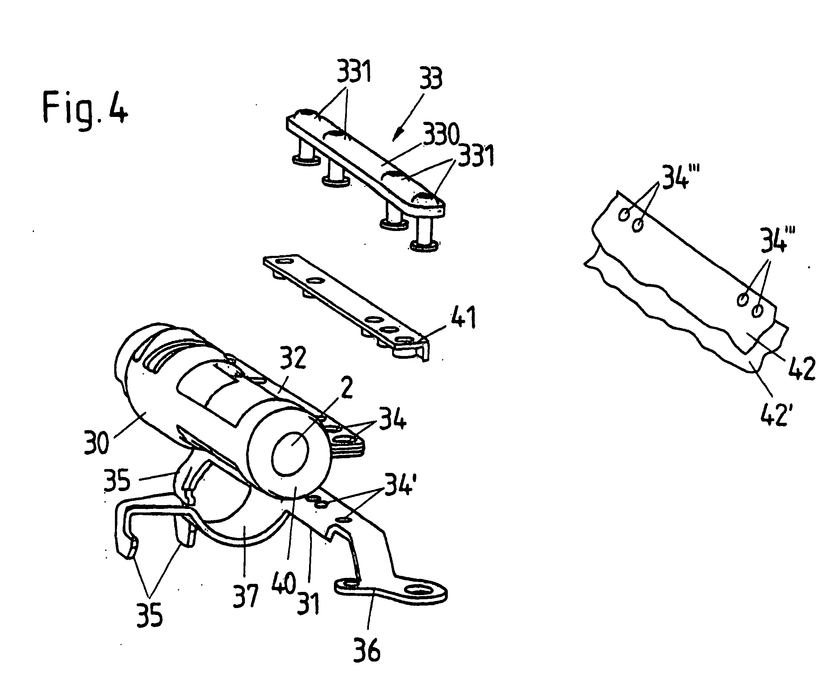

Figur 4 zeigt eine weitere Ausführungsform des Moduls aus Figur 1 b. Im Unterschied zum Modul aus Figur 1 b ist eine Isolierschiene 41 zwischen der auflegbaren Schiene 330 der separaten Befestigungsmittel 33 und dem Flansch 32 der Halteeinrichtung 30 vorgesehen. Diese Isolierschiene 41 weist im Bereich der Löcher 34 ebenfalls im wesentlichen hohlzylindrisch geformte Elemente auf, die in der montierten Position durch die Löcher 34 der Halteeinrichtung 30 und die Löcher 34' der Montagevorrichtung 31 hindurchgreifen. Auf diese Weise wird ein elektrisch leitender mechanischer Kontakt zwischen den Befestigungselementen 331 und dem Flansch 32 der Halteeinrichtung 30 verhindert. Zur elektrischen Isolierung zwischen dem Flansch 32 und der Montagevorrichtung 31 ist zumindest der zwischen diesen beiden Elementen anzuordnende Gassackabschnitt 42' zwingend notwendig.

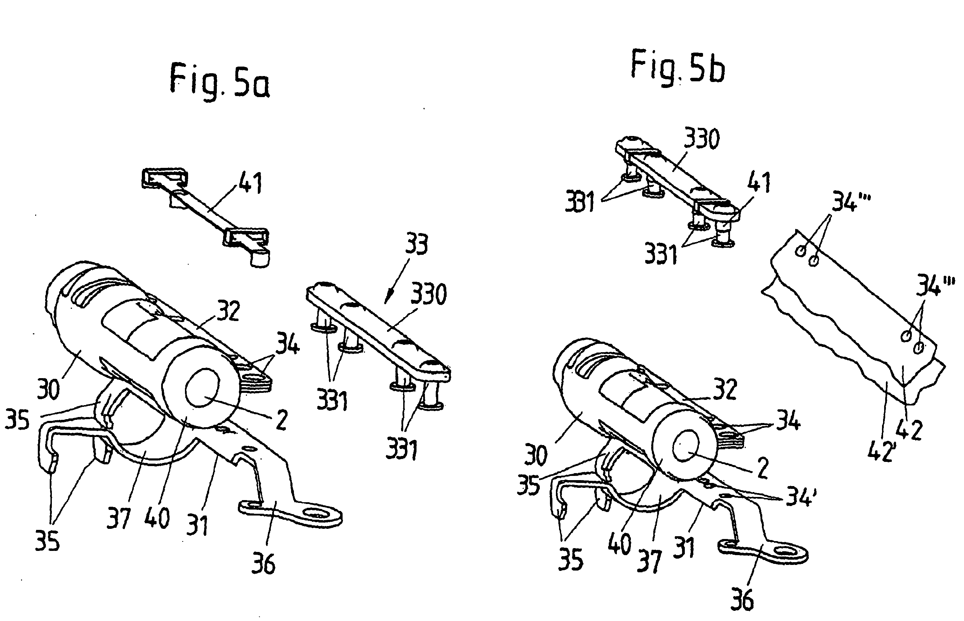

Figur 5a und Figur 5b zeigen eine weitere Variante einer Isolierschiene 41 gemäß der Ausführungsform aus Figur 4. Die Isolierschiene 41 lässt sich dabei entlang der auflegbaren Schiene 330 der separaten Befestigungsmittel 33 anordnen. Sie ist auf der bei der Montage dem Flansch 32 der Halteeinrichtung 30 zugewandten Oberfläche angeordnet und weist hohlzylindrische Elemente auf, die die Befestigungselemente 331 derart umfassen, dass in der montierten Lage der Befestigungselemente 331 kein elektrisch leitender Kontakt zwischen den Befestigungselementen 331 und dem Flansch 32 der Halteeinrichtung 30 und/oder der Montagevorrichtung 31 besteht. Auch bei dieser Ausführungsform ist zur elektrischen Isolierung zwischen dem Flansch 32 und der Montagevorrichtung 31 zumindest der zwischen diesen beiden Elementen anzuordnende Gassackabschnitt 42' zwingend notwendig.

Die verschiedenen in den Figuren 1a bis 5b gezeigten Isoliermittel 40, 41, 42, 42', 43 lassen sich in unterschiedlichen Kombinationen einsetzen. Wesentlich ist jeweils ausschließlich, dass die Isoliermittel derart wirken, dass der Fluss eines elektrischen Gleich- oder Wechselstroms zwischen dem Funktionselement 2 und der Karosserie eines Kraftfahrzeuges zuverlässig verhindert wird.

Neben den in den Figuren 1a bis 5b gezeigten Ausführungsformen ist ebenso denkbar, die elektrische Isolierung zwischen Funktionselement 2 und der Karosserie eines Kraftfahrzeugs dadurch zu gewährleisten, dass die Fixiervorrichtung 3 zumindest abschnittsweise aus einem elektrisch nicht leitfähigen Material beispielsweise einem geeigneten Kunststoff hergestellt ist. Im Hinblick auf die in den Figuren 1a bis 5b gezeigte Ausführungsform der die Fixiervorrichtung 3 bildenden Halteeinrichtung 30 und Montagevorrichtung 31 ist es zur Erzielung der elektrischen Isolierung des Funktionselementes 2 möglich, die Halteeinrichtung 30 und/oder die Montagevorrichtung 31 aus einem elektrisch nicht leitenden Werkstoff herzustellen.

### Bezugszeichenliste

- 1: Modul
- 2: Funktionselement, Gasgenerator
- 3: Fixiervorrichtung
- 20: Elektrische Auslöseeinrichtung
- 21: Mantelfläche Gasgenerator
- 30: Halteeinrichtung
- 31: Montagevorrichtung
- 32: Flansch der Halteeinrichtung
- 33: Separate Befestigungsmittel
- 34, 34", 34"': Löcher
- 35: Befestigungshaken
- 36: Befestigungsfüße
- 37: Aufnahmeabschnitt
- 40: Hohlzylindrisches Isolierelement.
- 41: Isolierschiene
- 42, 42': Gassackabschnitt
- 43: Isolierschuhe
- 330: Auflegbare Schiene
- 331: Befestigungselemente

## Patentansprüche

1. Modul (1) für eine Insassenschutzvorrichtung eines Kraftfahrzeugs mit
- einem in einem Crash-Fall des Kraftfahrzeugs aktivierbaren Funktionselement (2), das ein elektrisch leitfähiges Material aufweist, und
- einer Fixiervorrichtung (3) zum mechanischen Festlegen des Funktionselementes () an der Karosserie des Kraftfahrzeugs.
wobei das Funktionselement (2) als Gasgenerator (2) mit einer zumindest abschnittsweise elektrisch leitenden Mantelfläche (21) ausgebildet ist und eine elektrisch gesteuerte Auslöseeinrichtung (20) aufweist, **dadurch gekennzeichnet, daß** die Mantelfläche (21) und die Auslöseeinrichtung (20) gegenüber der Karosserie des Kraftfahrzeuges elektrisch isoliert sind.

2. Modul (1) gemäß Anspruch 1, **dadurch gekennzeichnet dass** das Funktionselement (2) eine elektrische Auslöseeinrichtung (20) zur Aktivierung des Funktionselementes (2) in einem Crash-Fall aufweist.

3. Modul (1) gemäß Anspruch 1 oder 2, **dadurch gekennzeichnet, dass** die Fixiervorrichtung (3) zumindest abschnittsweise derart aus einem elektrisch nicht leitenden Material besteht, dass das Funktionselement (2) gegenüber der Karosserie des Kraftfahrzeuges elektrisch isoliert ist.

4. Modul (1) gemäß Anspruch 1 oder 2, **dadurch gekennzeichnet, dass** das Modul (1) Isoliermittel (40, 41, 42, 42', 43) aufweist, die das Funktionselement (2) gegenüber der Karosserie des Kraftfahrzeugs elektrisch isolieren.

5. Modul (1) gemäß Anspruch 4, **dadurch gekennzeichnet, dass** die Isoliermittel (40, 41; 42, 42', 43) das Funktionselement (2) gegenüber der Fixiervorrichtung (3) elektrisch isolieren und/oder die Fixiervorrichtung (3) gegenüber der Fahrzeugkarosserie elektrisch isolieren.

6. Modul (1) gemäß Anspruch 4 oder 5, **dadurch gekennzeichnet, dass** die Isoliermittel zumindest in den Bereichen des Funktionselements (2), die in mechanischem Kontakt mit der Fixiervorrichtung (3) stehen, als elektrisch isolierende Materialien am Funktionselement (2) vorgesehen sind.

7. Modul (1) gemäß einem der vorangehenden Ansprüche, **dadurch gekennzeichnet, dass** die Fixiervorrichtung (3) eine Halteeinrichtung (30) zur Aufnahme des Funktionselementes (2) und eine an der Halteeinrichtung (30) mechanisch festlegbare Montagevorrichtung (31) aufweist, die sich an der Karosserie des Kraftfahrzeuges mechanisch festlegen lässt.

8. Modul (1) gemäß Anspruch 7, **dadurch gekennzeichnet, dass** die Isoliermittel (40, 41, 42, 42', 43) derart vorgesehen sind, dass das Funktionselement (2) gegenüber der Halteeinrichtung (30) elektrisch isoliert ist und/oder die Halteeinrichtung (30) gegenüber der Montagevorrichtung (31) elektrisch isoliert ist und/oder die Montagevorrichtung (31) gegenüber der Karosserie des Kraftfahrzeuges elektrisch isoliert ist.

9. Modul (1) gemäß Anspruch 7 oder 8, **dadurch gekennzeichnet, dass** die Halteeinrichtung (30) zur Aufnahme eines im wesentlichen zylindrischen Funktionselementes (2) ausgebildet ist.

10. Modul (1) gemäß Anspruch 9, **dadurch gekennzeichnet, dass** die Isoliermittel (4) ein hohlzylindrisches Isolierelement (40) umfassen, das sich zwischen dem im wesentlichen zylindrischen Funktionselement (2) und der Halteeinrichtung (30) anordnen lässt.

11. Modul (1) gemäß einem der Ansprüche 7 bis 10, **dadurch gekennzeichnet, dass** die Halteeinrichtung (30) einen vom Funktionselement (2) weg gerichteten Flansch (32) zur Befestigung der Halteeinrichtung (30) an der Montagevorrichtung (31) aufweist.

12. Modul () gemäß Anspruch 11, **dadurch gekennzeichnet, dass** der Flansch (32) und/oder die Montagevorrichtung (31) Befestigungsmittel zum mechanischen Festlegen der Halteeinrichtung (30) an der Montagevorrichtung (31) aufweist.

13. Modul (1) gemäß Anspruch 11, **dadurch gekennzeichnet, dass** der Flansch (32) der Halteeinrichtung (30) mittels separater Befestigungsmittel (33) an der Montagevorrichtung (31) mechanisch fixierbar ist.

14. Modul (1) gemäß Anspruch 13, **dadurch gekennzeichnet, dass** der Flansch (32) eine Mehrzahl von Löchern (34) zum Durchführen der Befestigungsmittel (33) aufweist, wobei die Montagevorrichtung (31) korrespondierend angeordnete Löcher (34') umfasst.

15. Modul (1) gemäß Anspruch 14, **dadurch gekennzeichnet, dass** die Befestigungsmittel (33) eine auf den Flansch (32) auflegbare Schiene (330) mit im Abstand der Löcher (34) des Flansches (32) angeordneten nichtlösbaren oder lösbaren Befestigungselementen (331) zum Fixieren der Halteeinrichtung (30) an der Montagevorrichtung (31) aufweist.

16. Modul (1) gemäß Anspruch 15, **dadurch gekennzeichnet, dass** die Isoliermittel (4) eine Isolierschiene (41) zur elektrischen Isolierung zwischen den Befestigungsmitteln (331) und der Halteeinrichtung (30) aufweisen.

17. Modul (1) gemäß Anspruch 16, **dadurch gekennzeichnet, dass** sich die Isolierschiene (41) zwischen der auflegbaren Schiene (330) und dem Flansch (32) der Halteeinrichtung (30) erstreckt, wobei die Isolierschiene (41) im Bereich der Löcher (34) für die Befestigungselemente (331) derart in die Löcher (34) der Halteeinrichtung (30) und/oder in die Löcher (34') der Montagevorrichtung (31) eingreift, dass die Befestigungselemente (331) gegenüber der Halteeinrichtung (30) und/oder gegenüber der Montagevorrichtung (31) elektrisch isoliert sind.

18. Modul (1) gemäß Anspruch 16, **dadurch gekennzeichnet, dass** sich die Isolierschiene (41) zwischen dem Flansch (32) der Halteeinrichtung (30) und der Montagevorrichtung (31) erstreckt, wobei die Isolierschiene (41) im Bereich der Löcher (34) für die Befestigungselemente (331) derart in die Löcher (34') der Montagevorrichtung (31) und/oder in die Löcher (34) der Halteeinrichtung (30) eingreift, dass die Befestigungselemente (331) gegenüber der Halteeinrichtung (30) elektrisch isoliert sind.

19. Modul (1) gemäß einem der Ansprüche 15 bis 18, **dadurch gekennzeichnet, dass** ein Abschnitt eines Gassackes (42, 42') für ein Airbagmodul zwischen dem Flansch (32) der Halteeinrichtung (30) und der auflegbaren Schiene (330) und/oder zwischen dem Flansch (32) der Halteeinrichtung (30) und der Montagevorrichtung (31) angeordnet ist.

20. Modul (1) gemäß Anspruch 19, **dadurch gekennzeichnet, dass** in den Abschnitten des Gassackes (42, 42') Löcher (34"') zum Durchführen der Befestigungselemente (331) vorgesehen sind.

21. Modul (1) gemäß Anspruch 19 oder 20, **dadurch gekennzeichnet, dass** die Isoliermittel den oder die am Halteelement (30) angeordneten elektrisch isolieren ausgebildeten Abschnitte (42, 42') des Gassackes umfassen.

22. Modul (1) gemäß einem der vorangehenden Ansprüche, **dadurch gekennzeichnet, dass** das Funktionselement (2) als Gasgenerator für eine Airbageinrichtung ausgebildet ist.

23. Modul (1) gemäß einem der Ansprüche 1 bis 18, **dadurch gekennzeichnet, dass** das Funktionselement (2) zur Bereitstellung der Bewegung einer elektrisch auslösbaren Gurtstraffeinrichtung ausgebildet ist.

## Claims

1. Module (1) for a vehicle occupant protection device of a motor vehicle having
- a functional element (2) which can be activated in the event of the motor vehicle crashing and which has an electrically conductive material, and
- a securing device (3) for mechanically securing the functional element (2) to the bodywork of the motor vehicle,
the functional element (2) being designed as a gas generator (2) with an outer surface (21) which is electrically conductive at least in certain sections and having an electrically controlled trigger device (20), **characterized in that** the outer surface(21) and the trigger device (20) are electrically insulated from the bodywork of the motor vehicle.

2. Module (1) according to Claim 1, **characterized in that** the functional element (2) has an electrical trigger device (20) for activating the functional element (2) in the event of a crash.

3. Module (1) according to Claim 1 or 2, **characterized in that** the securing device (3) is composed, at least in certain sections, of an electrically non-conductive material in such a way that the functional element (2) is electrically insulated from the bodywork of the motor vehicle.

4. Module (1) according to Claim 1 or 2, **characterized in that** the module (1) has insulating means (40, 41, 42, 42', 43) which electrically insulate the functional element (2) from the bodywork of the motor vehicle.

5. Module (1) according to Claim 4, **characterized in that** the insulating means (40, 41; 42, 42', 43) electrically insulate the functional element (2) from the securing device (3) and/or electrically insulate the securing device (3) from the bodywork of the vehicle.

6. Module (1) according to Claim 4 or 5, **characterized in that** the insulating means are provided as electrically insulating materials on the functional element (2), at least in the regions of the functional element (2) which are in mechanical contact with the securing device (3).

7. Module (1) according to one of the preceding claims, **characterized in that** the securing device (3) has a holding device (30) for receiving the functional element (2) and a mounting device (31) which can be mechanically secured to the holding device (30) and can be mechanically secured to the bodywork of the motor vehicle.

8. Module (1) according to Claim 7, **characterized in that** the insulating means (40, 41, 42, 42', 43) are provided in such a way that the functional element (2) is electrically insulated from the holding device (30) and/or the holding device (30) is electrically insulated from the mounting device (31) and/or the mounting device (31) is electrically insulated from the bodywork of the motor vehicle.

9. Module (1) according to Claim 7 or 8, **characterized in that** the holding device (30) is designed to receive an essentially cylindrical functional element (2).

10. Module (1) according to Claim 9, **characterized in that** the insulating means (4) comprise a hollow cylindrical insulating element (40) which can be arranged between the essentially cylindrical functional element (2) and the holding device (30).

11. Module (1) according to one of Claims 7 to 10, **characterized in that** the holding device (30) has a flange (32), directed away from the functional element (2), for attaching the holding device (30) to the mounting device (31).

12. Module (1) according to Claim 11, **characterized in that** the flange (32) and/or the mounting device (31) have attachment means for mechanically securing the holding device (30) to the mounting device (31).

13. Module (1) according to Claim 11, **characterized in that** the flange (32) of the holding device (30) can be mechanically secured to the mounting device (31) by means of separate attachment means (33).

14. Module (1) according to Claim 13, **characterized in that** the flange (32) has a plurality of holes (34) for feeding through the attachment means (33), the mounting device (31) comprising correspondingly arranged holes (34').

15. Module (1) according to Claim 14, **characterized in that** the attachment means (33) have a rail (330) which can be fitted onto the flange (32) and has non-detachable or detachable attachment elements (331), arranged in the distance of the holes (34) of the flange (32), for securing the holding device (30) to the mounting device (31).

16. Module (1) according to Claim 15, **characterized in that** the insulating means (4) have an insulating rail (41) for providing electrical insulation between the attachment means (331) and the holding device (30).

17. Module (1) according to Claim 16, **characterized in that** the insulating rail (41) extends between the rail (330) which can be fitted on and the flange (32) of the holding device (30), the insulating rail (41) in the region of the holes (34) for the attachment elements (331) engaging in the holes (34) of the holding device (30) and/or in the holes (34') of the mounting device (31) in such a way that the attachment elements (331) are electrically insulated from the holding device (30) and/or from the mounting device (31).

18. Module (1) according to Claim 16, **characterized in that** the insulating rail (41) extends between the flange (32) of the holding device (30) and the mounting device (31), the insulating rail (41) in the region of the holes (34) for the attachment elements (331) engaging in the holes (34') of the mounting device (31) and/or in the holes (34) of the holding device (30) in such a way that the attachment elements (331) are electrically insulated from the holding device (30).

19. Module (1) according to one of Claims 15 to 18, **characterized in that** a section of an airbag (42, 42') for an airbag module is arranged between the flange (32) of the holding device (30) and the rail (330) which can be fitted on and/or between the flange (32) of the holding device (30) and the mounting device (31).

20. Module (1) according to Claim 19, **characterized in that** holes (34'") for feeding through the attachment elements (331) are provided in the sections of the airbag (42, 42').

21. Module (1) according to Claim 19 or 20, **characterized in that** the insulating means comprise the section or sections (42, 42') of the airbag which are arranged on the holding element (30) and are formed so as to be electrically insulating.

22. Module (1) according to one of the preceding claims, **characterized in that** the functional element (2) is formed as a gas generator for an airbag device.

23. Module (1) according to one of Claims 1 to 18, **characterized in that** the functional element (2) is designed to make available the movement of an electrically triggerable seatbelt pretensioning device.

## Revendications

1. Module (1) pour un dispositif de protection des occupants d'un véhicule automobile, avec
- un élément de fonction (2) pouvant être activé en cas de collision du véhicule automobile, lequel présente un matériau électroconducteur, et
- un dispositif de fixation (3) pour la fixation mécanique de l'élément de fonction (2) sur la carrosserie du véhicule automobile,
l'élément de fonction (2) étant réalisé en tant que générateur de gaz (2) avec une enveloppe (21) électroconductrice au moins par sections, et présentant un dispositif de déclenchement (20) à commande électrique, **caractérisé en ce que** l'enveloppe (21) et le dispositif de déclenchement (20) sont isolés électriquement par rapport à la carrosserie du véhicule automobile.

2. Module (1) selon la revendication 1, **caractérisé en ce que** l'élément de fonction (2) présente un dispositif de déclenchement électrique (20) pour l'activation de l'élément de fonction (2) en cas de collision.

3. Module (1) selon la revendication 1 ou 2, **caractérisé en ce que** le dispositif de fixation (3) se compose, au moins par sections, d'une matière non électroconductrice de manière à ce que l'élément de fonction (2) soit isolé électriquement par rapport à la carrosserie du véhicule automobile.

4. Module (1) selon la revendication 1 ou 2, **caractérisé en ce que** le module (1) présente des moyens d'isolation (40, 41, 42, 42', 43) qui isolent électriquement l'élément de fonction (2) par rapport à la carrosserie du véhicule automobile.

5. Module (1) selon la revendication 4, **caractérisé en ce que** les moyens d'isolation (40, 41, 42, 42', 43) isolent électriquement l'élément de fonction (2) par rapport au dispositif de fixation (3) et/ou isolent électriquement le dispositif de fixation (3) par rapport à la carrosserie du véhicule automobile.

6. Module (1) selon la revendication 4 ou 5, **caractérisé en ce que** les moyens d'isolation sont prévus au moins dans les zones de l'élément de fonction (2) qui sont en contact mécanique avec le dispositif de fixation (3), en tant que matériaux d'isolation électrique au niveau de l'élément de fonction (2).

7. Module (1) selon l'une quelconque des revendications précédentes, **caractérisé en ce que** le dispositif de fixation (3) présente un dispositif de maintien (30) pour le logement de l'élément de fonction (2) ainsi qu'un dispositif de montage (31) fixé mécaniquement de manière amovible sur le dispositif de maintien (30), que l'on peut fixer mécaniquement sur la carrosserie du véhicule automobile.

8. Module (1) selon la revendication 7, **caractérisé en ce que** les moyens d'isolation (40, 41, 42, 42', 43) sont prévus de manière à ce que l'élément de fonction (2) soit isolé électriquement par rapport au dispositif de maintien (30) et/ou de manière à ce que le dispositif de maintien (30) soit isolé électriquement par rapport au dispositif de montage (31) et/ou de manière à ce que le dispositif de montage (31) soit isolé électriquement par rapport à la carrosserie du véhicule automobile.

9. Module (1) selon la revendication 7 ou 8, **caractérisé en ce que** le dispositif de maintien (30) est réalisé pour le logement d'un élément de fonction (2) essentiellement cylindrique.

10. Module (1) selon la revendication 9, **caractérisé en ce que** les moyens d'isolation (4) comprennent un élément isolant cylindrique creux (40), lequel peut être placé entre l'élément de fonction (2) essentiellement cylindrique et le dispositif de maintien (30).

11. Module (1) selon l'une quelconque des revendications 7 à 10, **caractérisé en ce que** le dispositif de maintien (30) présente une attache (32) pointant en direction opposée à l'élément de fonction (2), pour la fixation du dispositif de maintien (30) sur le dispositif de montage (31).

12. Module (1) selon la revendication 11, **caractérisé en ce que** l'attache (32) et/ou le dispositif de montage (31) présente des moyens de fixation pour la fixation mécanique du dispositif de maintien (30) sur le dispositif de montage (31).

13. Module (1) selon la revendication 11, **caractérisé en ce que** l'attache (32) du dispositif de maintien (30) peut être fixée mécaniquement à l'aide de moyens de fixations (33) distincts sur le dispositif de montage (31).

14. Module (1) selon la revendication 13, **caractérisé en ce que** l'attache (32) présente plusieurs trous (34) pour faire passer les moyens de fixation (33), le dispositif de montage (31) comprenant des trous (34') disposés de manière correspondante.

15. Module (1) selon la revendication 14, **caractérisé en ce que** les moyens de fixation (33) présentent un rail (330) pouvant être posé sur l'attache (32) avec des éléments de fixation (331) non détachables ou détachables disposés à distance des trous (34) de l'attache (32), pour la fixation du dispositif de maintien (30) sur le dispositif de montage (31).

16. Module (1) selon la revendication 15, **caractérisé en ce que** les moyens d'isolation (4) présentent une barre d'isolation (41) pour l'isolation électrique entre les moyens de fixation (331) et le dispositif de maintien (30).

17. Module (1) selon la revendication 16, **caractérisé en ce que** la barre d'isolation (41) s'étend entre le rail posable (330) et l'attache (32) du dispositif de maintien (30), la barre d'isolation (41) étant en prise, au niveau de la zone des trous (34) pour les éléments de fixation (331), avec les trous (34) du dispositif de maintien (30) et/ou avec les trous (34') du dispositif de montage (31), de manière à ce que les éléments de fixation (331) soient isolés électriquement par rapport au dispositif de maintien (30) et/ou par rapport au dispositif de montage (31).

18. Module (1) selon la revendication 16, **caractérisé en ce que** la barre d'isolation (41) s'étend entre l'attache (32) du dispositif de maintien (30) et le dispositif de montage (31), la barre d'isolation (41) étant en prise, au niveau de la zone des trous (34) pour les éléments de fixation (331), avec les trous (34') du dispositif de montage (31) et/ou avec les trous (34) du dispositif de maintien (30), de manière à ce que les éléments de fixation (331) soient isolés électriquement par rapport au dispositif de maintien (30).

19. Module (1) selon l'une quelconque des revendications 15 à 18, **caractérisé en ce qu'**une section d'une poche de gaz (42, 42') pour un module d'Airbag est disposée entre l'attache (32) du dispositif de maintien (30) et le rail posable (330) et/ou entre l'attache (32) du dispositif de maintien (30) et le dispositif de montage (31).

20. Module (1) selon la revendication 19, **caractérisé en ce qu'**au niveau des sections de la poche de gaz (42, 42'), des trous (34''') sont prévus pour faire passer les éléments de fixation (331).

21. Module (1) selon la revendication 19 ou 20, **caractérisé en ce que** les moyens d'isolation comprennent une ou des sections (42, 42') de la poche de gaz disposées sur l'élément de maintien (30) et étant électriquement isolantes.

22. Module (1) selon l'une quelconque des revendications précédentes, **caractérisé en ce que** l'élément de fonction (2) est réalisé en tant que générateur de gaz pour un dispositif d'Airbag.

23. Module (1) selon l'une quelconque des revendications 1 à 18, **caractérisé en ce que** l'élément de fonction (2) est agencé pour pouvoir activer un dispositif de ceinture tensionable commandé électriquement.
